# EUROPEAN PATENT SPECIFICATION

(11) **EP 0 328 804 B1**
(45) Date of publication and mention of the grant of the patent: **25.01.1995**
(21) Application number: 88303066.0
(22) Date of filing: 06.04.1988
(51) Int. Cl.: F16B 5/12, E04F 19/02

(54) **Fastener and strip mounting**
Befestigungsvorrichtung und Streifenbefestigung
Dispositif de fixation et fixation d'une bande

(30) Priority: 08.02.1988 GB 8802844
(43) Date of publication of application: 23.08.1989
(73) Proprietor: RICHARD BURBIDGE LIMITED, Oswestry Shropshire SY11 1HZ (GB)
(72) Inventor: Jackson, Peter, Oswestry Shropshire SY11 1HZ (GB)
(74) Representative: Shaw, Laurence

(56) References cited:
- DE-A- 1 400 868
- DE-A- 1 936 514
- GB-A- 2 124 267
- US-A- 1 219 616
- US-A- 2 090 588
- BOUWWERELD, vol. 68, no. 47, 24th November 1972, pages 17-22, Doetinchem, NL; "Produktenoverzicht"

## Description

This invention relates to the fastening and mounting of elements, e.g. decorative wooden strip mouldings. The invention is particularly concerned with the mounting of decorative finishing (hard)wood mouldings, commonly known as architectural mouldings.

With precision machined (hard)wood mouldings, it is important to provide a section that can readily, economically and consistently be machined, without encouraging warping or distortion or even mechanical failure under stress, for example, when being handled and fitted. Temperature and humidity changes have a bearing on this, from the initial choice and machining of raw materials stocks, to the shipment and end-user environments.

In so-called 'blind-fixing', that is a fitting which is not visible from a 'front' orientation of an element held by the fitting, it is generally desirable to avoid penetrating the thickness or depth of that element by a fixing passing from one (front) surface to an opposite (rear) surface.

In the case of an elongate strip the spacing between fasteners is a crucial factor in determining the number of fasteners required for a given length of strip and this is in turn reflected in the security grip or hold afforded by an individual fastening. Too secure a hold will result in the strip being difficult to remove, for example by simple prising apart from the mounting surface, without causing surface damage and too loose a fastening could allow the strip to become inadvertently dislodged, for example by casual contact.

The term 'strip' used herein, embraces any shape of article to be mounted, but is especially concerned with elongate objects - that is whose cross-section is small in relation to their length, and more particularly, where the cross-section is uniform over the length.

DE-A-1963514 discloses a fastener to receive a strip element. The fastener comprises a floor and upstanding fingers having shoulders on the outer walls thereof, adjacent the midpoint. The element is curved and has a mouth in the rear face thereof, the edges of the mouth lying on convergent planes. The floor of the fastener has a bolt by which the fastener is held to a wall. In use the fastener is fixed to the wall and the edges of the mouth engage the underside of the shoulders on the fingers.

An assembly according to the preamble of claim 1 is known from Bouwereld vol.68, no.47, November 24, 1972, pages 17 to 22, Doetinchem, Netherlands, which discloses at page 19 a profile of Schock Benelux having an elongate T-shaped channel in the rear face. The profile is mounted on a fastener mounted on a wall, the fastener having a base and opposite spring arms. The free ends of the arms are of a specific shape in that they first taper inwardly towards each other and then outwardly to define a cap portion having a free edge facing the base.

According to the invention in one aspect there is provided a wall mounted assembly comprising a fastener and a strip element as specified in claim 1.

In another aspect of the invention there is provided a method of mounting a strip element on a wall as specified in claim 7

Preferably, the fastener is fabricated of synthetic plastics material, such as ABS, for example by moulding.

In use, a line, horizontal or vertical, is marked on the mounting surface, at a position corresponding to the desired strip centre line (or fastener aperture centre line if the fastener is not symmetrically-disposed across the section width). This line can be determined by offering the strip itself up to the mounting surface and marking along an edge thereof and subsequently measuring from that edge line as a reference for the fastener axis. Holes are then drilled at prescribed intervals, for example approximately 400 mm, plugged and the fasteners secured, for example by screws, and aligned. The strip can then simply be offered up in alignment with the fasteners and pressed home against the mounting surface, to effect the snap-action engagement of the fastener limbs with the recess(es) in the rear face thereof.

A strip jointing system of the invention can comprise rectangular corner blocks, with whose side faces the ends of sections, severed at right angles to the section length, can simply be butted, without the need for elaborate corner mitring.

There now follows a description of some particular embodiments of the invention with reference to the accompanying diagrammatic and schematic drawings, in which:
Figure 1 shows an end elevation of a fastener;
Figure 2 shows a scrap section of an element, such as a strip section, to be secured by the fastener of Figure 1;
Figure 3 shows an end elevation of the fastener shown in Figure 1, taken generally along the line 3-3', but with some sectional detail;
Figure 4 shows a plan view, of the fastener shown in Figure 1 taken along the line 4-4', and

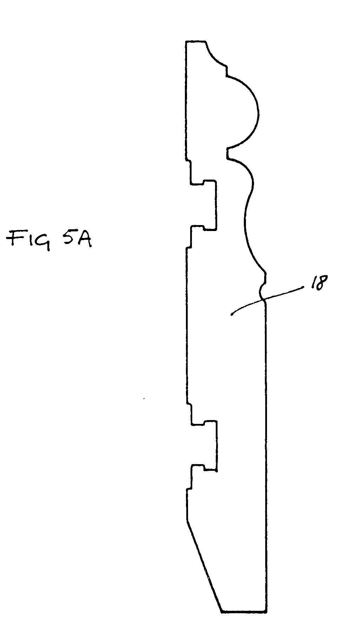

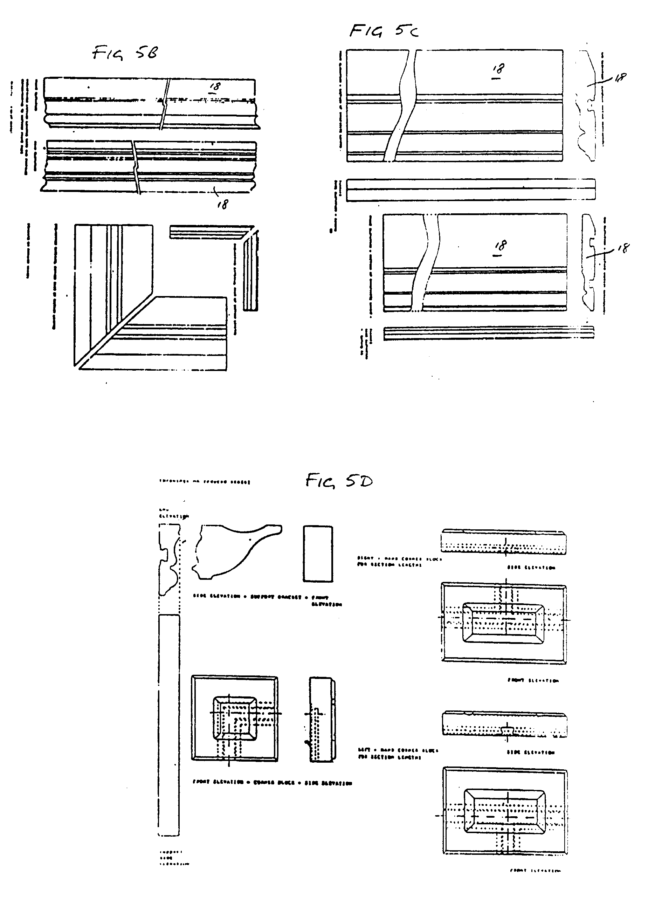

Figures 5 onwards show various other types of strip element and associated fittings, corner joints, some with pre-mitred and others prescribed end face profiles.

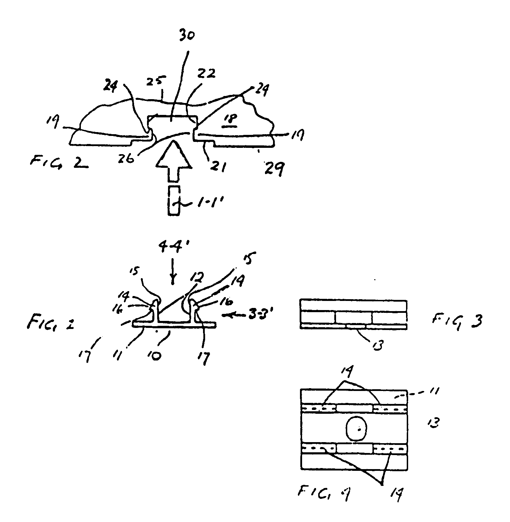

Referring to the drawings, a fastener 10 comprises a base portion 11 with two opposed upstanding limb portions 12, whose disposition at rest can be seen more clearly from Figure 4. Each limb 12 has a straight inner face 15, and a tapered outer end nose 14, having a bevelled or sloping outer face 16. The tapered noses 14 are designed to pass between the side walls 26 of the opposed mouth projections 19 of a recess 30 in the rear face of a strip element 18, shown partially in Figure 2.

The fastener 10 is moulded of resiliently deformable synthetic plastics material so that the limbs 12 can move towards each other until they are received within the recess 30 in the body of the element 18, the outer bevelled faces 16 first engaging the inwardly-directed faces 26 at the mouth of the recess 30 and on further penetrating insertion towards the floor of the recess 30, the limbs 12 are disengaged from the restraining side walls 26 and relax into the full width separation in the innermost cavity region of the recess 30. The undersides 17 of the noses 14 then abut the upper faces 24 of the projections 19 in a plane generally parallel to the base 11 of the fastener 10. This restrains removal of the fastener, which however can still be prised away by wriggling or otherwise manoeuvring the strip 18 relative to the fastener 10 body in order to flex and inwardly deflect the limbs 12 and thereby to disengage the noses 14 from the recess 30.

An aperture 13 is provided in the base plate 11 of the fastener 10 to facilitate attachment to a mounting surface, for example by a simple screw or nail fitting. As shown in the Figure 4 the aperture is somewhat oval.

In practice, the fasteners 10 would be spaced at regular, say 45.7 cm, 18 inch, intervals along the length of the strip element 18. Alignment can be achieved simply by ruling a line representing the desired mounting axis on a mounting surface and aligning the apertures 13 of successive fasteners 10 with that line.

The recess 30 incorporates a shoulder entry region 21, to accommodate the depth of the fastener base 11, so that the strip element 18 may be mounted with its rear face 29 in flush abutment with the mounting surface.

The fastening direction - that is the direction of relative linear translational movement of the fastener 10 and strip element 18 - is indicated generally by arrow 1-1' in Figure 2.

The remaining Figures show various forms of strip element, some of greater width and depth and with multiple (parallel) grooves or elongate recesses on their rear faces.

The rear strip faces may incorporate a bevel at the underside to accommodate mounting surface irregularities, particularly when the strip is located at the intersection of two mounting surfaces - for example, between a wall and a floor, with a skirting moulding.

The various other components of the strip and strip mounting system, for example, corner jointing blocks and pre-mitred corner pairs of section strips, may also incorporate grooves on the rear faces to receive the fasteners.

Such components ease the fitting and enhance the 'DIY' appeal of the system.

Thus, prescribed strip element lengths may be provided, with one end profiled as a complementary shape to the section face, so that two such elements may be abutted together into intimate contact.

The spaced fasteners can accommodate lack of regularity, unevenness or misalignment of the mounting surfaces; for example walls are not always truly square with themselves or floors and ceilings; and similarly nor are window and door frames necessarily square in themselves or with adjacent edges and surfaces.

The strips may be used for limited loading bearing (typically up to just under 14 kg) for such purposes as hanging pictures (with picture rail strips) or supporting decorative plates (with plate rack strips).

## Claims

1. A wall mounted assembly comprising a fastener (10) and a strip element (18); the fastener (10) being secured to the wall, the fastener (10) comprising a base (11) having upstanding limbs (12) movable towards each other; the element (18) having a front face and a rear face, a recess (30) being present in the rear face; the limbs (12) of the fastener (10) being received in the recess (30), and engaged therewith by engagement of a side part of the limbs (12), characterised in that the limbs (12) protrude normal to the base (11) and the side part of the limbs (12) is a nose (14) located at the end of the limbs (12) with a sloping outer face (16) and an underlying ledge (17), the ledges (17) being in contact with corresponding abutment ledges (24) of a mouth portion of reduced width between sidewalls (26) of the recess (30).

2. An assembly according to Claim 1, characterised in that the base (11) of the fastener (10) includes an aperture (13) to receive a screw to hold the fastener (10) to the wall, the aperture (13) being generally oval in plan.

3. An assembly according to Claim 1 or 2, characterised in that the element (18) is an architectural moulding.

4. An assembly according to Claim 3 characterised in that the element (18) is precision machined of wood.

5. An assembly according to Claim 3 or 4 characterised in that the rear face (29) of the element (18) includes a relieved shoulder (21) on each side of the recess (30) so that the element (18) may be mounted on a fastener (10) and in flush abutment against the support wall.

6. An assembly according to any preceding Claim characterised in that two elements (18) are each mounted in a corner by fasteners (10) secured to walls making up the corner, the abutting faces of the elements (18) having been cut to shape without mitring.

7. A method of mounting a strip element (18) on a wall by means of a fastener (10) of the preceding claims, the element (18) having a recess (30) in a rear face and the fastener having forward projecting limbs (12) each having a nose (14), at the end thereof, the distance between the side walls (26) of the recess (30) being less than that separating the limbs (12) at rest, the method comprising securing the fastener (10) to the wall, and then urging the element (18) on to the fastener (10) by a rectilinear movement to flex the limbs (12) towards each other to enter the mouth of the recess (30) and then to move apart to engage the ledges (17) of the noses (14) with the ledges (24) of the recess (30).

## Patentansprüche

1. Eine wandmontierte Baugruppe, umfassend ein Befestigungsmittel (10) und ein Streifenelement (18), wobei das Befestigungsmittel (10) an der Wand befestigt wird, wobei das Befestigungsmittel (10) eine Basis (11) mit zueinander beweglichen, aufrechten Schenkeln (12) aufweist, wobei das Element (18) eine Vorderseite und eine Rückseite aufweist, wobei eine Ausnehmung (30) in der Rückseite vorhanden ist, wobei die Schenkel (12) des Befestigungsmittels (10) in der Ausnehmung (30) aufgenommen werden und durch Eingriff eines Seitenteils der Schenkel (12) in diese eingreifen, dadurch gekennzeichnet, daß die Schenkel (12) normal zur Basis (11) vorstehen und das Seitenteil der Schenkel (12) eine am Ende der Schenkel (12) befindliche Nase (14) mit einer geneigten Außenfläche (16) und einer darunterliegenden Leiste (17) ist, wobei die Leisten (17) Kontakt mit entsprechenden Widerlagerleisten (24) eines Mündungsabschnitts mit verringerter Breite zwischen Seitenwänden (26) der Ausnehmung (30) haben.

2. Baugruppe nach Anspruch 1, dadurch gekennzeichnet, daß die Basis (11) des Befestigungsmittels (10) eine Öffnung (13) zur Aufnahme einer Schraube zum Festhalten des Befestigungsmittels (10) an der Wand aufweist, wobei die Öffnung (13) einen allgemein ovalen Querschnitt aufweist.

3. Baugruppe nach Anspruch 1 oder 2, dadurch gekennzeichnet, daß das Element (18) ein Architekturformteil ist.

4. Baugruppe nach Anspruch 3, dadurch gekennzeichnet, daß das Element (18) aus Holz präzisionsbearbeitet ist.

5. Baugruppe nach Anspruch 3 oder 4, dadurch gekennzeichnet, daß die Rückseite (29) des Elementes (18) einen hinterdrehten Ansatz (21) an jeder Seite der Ausnehmung (30) aufweist, so daß das Element (18) an einem Befestigungsmittel (10) und bündig an der Stützwand anliegend montiert ist.

6. Baugruppe nach einem der vorhergehenden Ansprüche, dadurch gekennzeichnet, daß zwei Elemente (18) jeweils in einer Ecke durch an den die Ecke bildenden Wänden befestigte Befestigungsmittel (10) montiert sind, wobei die aneinanderstoßenden Flächen der Elemente (18) ohne Gehrung zugeschnitten wurden.

7. Verfahren zur Montage eines Streifenelementes (18) an einer Wand mit Hilfe eines Befestigungsmittels (10) der vorhergehenden Ansprüche, wobei das Element (18) eine Ausnehmung (30) in einer Rückseite und das Befestigungsmittel nach vorne abstehende Schenkel (12) jeweils mit einer Nase (14) am Ende aufweist, wobei der Abstand zwischen den Seitenwänden (26) der Ausnehmung (30) geringer ist als der die Schenkel (12) im Ruhezustand trennende Abstand, wobei das Verfahren die Befestigung des Befestigungsmittels (10) an der Wand umfaßt, und danach Drücken des Elementes (18) auf das Befestigungsmittel (10) durch eine geradlinige Bewegung, um die Schenkel (12) zwecks Eintritts in die Mündung der Ausnehmung (30) und dann zum Auseinanderbewegen zwecks Eingriffs der Leisten (17) der Nasen (14) mit den Leisten (24) der Ausnehmung (30) zueinander hin zu drücken.

## Revendications

1. Assemblage monté sur un mur comprenant une attache (10) et un élément de moulure (18), l'attache (10) étant fixée au mur et cette attache (10) étant composée d'une base (11) avec des membres verticaux (12) qui se déplacent l'un vers l'autre, l'élément (18) ayant une surface avant et une surface arrière, un renfoncement (30) se trouvant sur la surface arrière ; les membres (12) de l'attache (10) se placent dans le renfoncement (30), dans lequel ils s'engagent en engageant une partie latérale des membres (12), caractérisée en ce que les membres (12) se prolongent normalement vers la base (11) et la partie latérale des membres (12) est une oreille (14) située à l'extrémité des membres (12), avec une surface intérieure en pente (16) et un rebord inférieur (17), les rebords (17) se trouvant en contact avec les rebords correspondants des abouts (24) appartenant à une partie d'orifice de largeur réduite, entre les parois latérales (26) du renfoncement (30).

2. Assemblage selon la revendication 1, caractérisé en ce que la base (11) de l'attache (10) comprend une ouverture (13) destinée à recevoir une vis pour fixer l'attache (10) au mur, l'ouverture (13) étant généralement dans un plan ovale.

3. Assemblage selon les revendications 1 ou 2, caractérisé en ce que l'élément (18) est une moulure ornementale.

4. Assemblage selon la revendication 3, caractérisé en ce que l'élément (18) est fabriqué à l'aide d'une machine de précision pour le travail du bois.

5. Assemblage selon les revendications 3 ou 4, caractérisé en ce que la surface arrière (29) de l'élément (18) comprend une épaule de secours (21) de chaque côté du renfoncement (30) de façon à ce que l'élément (18) puisse être monté sur une attache (10), et placé tout contre le mur de support.

6. Assemblage selon toute revendication précédente caractérisé en ce que les deux éléments (18) sont chacun montés dans un coin par des attaches (10) fixées aux murs formant le coin, les parties transversales aboutées de l'élément (18) ayant été coupées selon le besoin, sans biseautage.

7. Méthode d'assemblage sur un mur d'un élément de moulure (18), au moyen d'une attache (10), selon les revendications précédentes, l'élément (18) ayant un renfoncement (30) sur la surface arrière, et l'attache étant munie de membres projetés vers l'avant (12), chacun ayant une oreille (14) avec, à l'extrémité de celle-ci, une distance entre les parois latérales (26) du renfoncement (30) inférieure à celle qui sépare les membres (12), la méthode consistant à fixer l'attache (10) au mur et à presser l'élément (18) sur l'attache (10) par un mouvement rectiligne permettant aux membres (12) de fléchir l'un vers l'autre afin de pénétrer dans l'orifice du renfoncement (30) et ensuite de se séparer afin d'engager les rebords (17) des oreilles (14) avec les rebords (24) du renfoncement (30).
